**Europäisches Patentamt**

**European Patent Office**

**Office européen des brevets**

(19)

(11) Veröffentlichungsnummer : **0 184 029**
**B1**

(12) **EUROPÄISCHE PATENTSCHRIFT**

(45) Veröffentlichungstag der Patentschrift :
06.07.88

(51) Int. Cl.⁴ : **H 01 S 3/045**, H 01 S 3/03

(21) Anmeldenummer : 85114341.2

(22) Anmeldetag : 12.11.85

(54) **Gaslaser, insbesondere Ionenlaser.**

(30) Priorität : **15.11.84 DE 8433460 U**

(43) Veröffentlichungstag der Anmeldung :
**11.06.86 Patentblatt 86/24**

(45) Bekanntmachung des Hinweises auf die Patenterteilung : **06.07.88 Patentblatt 88/27**

(84) Benannte Vertragsstaaten :
**CH FR GB IT LI SE**

(56) Entgegenhaltungen :
**WO-A-82/039 50**
**FR-A- 1 570 768**
**US-A- 3 531 734**
**US-A- 3 763 442**
**US-A- 3 894 795**
**INSTRUMENTS AND EXPERIMENTAL TECHNIQUES,
Band 27, Nr. 1, Teil 2, Januar-Februar 1984, Seiten
194-197, Plenum Publishing Co., New York, US; V.G.
IL'YUSHKO et al.: "Segmented metal discharge tubes
for a nitrogen ultraviolet laser with a longitudinal
discharge"**
**JOURNAL OF PHYSICS E: SCIENTIFIC INSTRU-
MENTS, Band 6, 1973, Seiten 880-884, London, GB;
J.C.L. CORNISH et al.: "A demountable argon ion
laser of 'all-metal' construction"**
**ZEITSCHRIFT FÜR ANGEWANDTE PHYSIK, Band 29,
Nr. 4, 1970, Seiten 246-248, Berlin, DE; G. SCHÄFER et
al.: "Ein Entladungsrohr aus cloxierten Al-Segmenten für Ionenlaser"**

(73) Patentinhaber : **Firma Carl Zeiss**
**D-7920 Heidenheim (Brenz) (DE)**
**CH FR IT LI SE**
**CARL-ZEISS-STIFTUNG trading as CARL ZEISS**

**D-7920 Heidenheim (Brenz) (DE)**
**GB**

(72) Erfinder : **Gerhardt, Harald, Dr.**
**Ohlauer Strasse 3**
**D-3012 Langenhagen (DE)**

EP 0 184 029 B1

## Beschreibung

Die vorliegende Erfindung betrifft einen Gaslaser, insbesondere einen Ionenlaser. Bei einem solchen Laser brennt in einem gasgefüllten zwischen einer Kathode und einer Anode angeordneten Entladungsrohr eine Plasma-Entladung, in der die Gasatome oder Gasionen angeregt und zur Lichtemission gebracht werden.

Bei einem Ionenlaser wird im Betrieb das Entladungsrohr sehr heiß, was u. a. die Belastbarkeit und die Lebensdauer des Lasers begrenzt.

Aus der US-A-4 378 600 ist ein Ionenlaser bekannt, bei dem das Entladungsrohr gekühlt wird. Bei diesem Laser ist das Entladungsrohr mit Hilfe mehrerer Scheiben in einem gasgefüllten Trägerrohr abgestützt, das von einem Außenrohr mit Abstand umgeben wird. Der von diesen beiden Rohren gebildete Außenraum ist von einem Kühlmittel durchströmt. Die Abstützscheiben sind aus Kupfer ausgebildet und transportieren durch Wärmeleitung die Wärme vom Entladungs- zum Trägerrohr. Das Kühlmittel, welches das Trägerrohr umströmt transportiert die Wärme von diesem weg.

Dieser bekannte Ionenlaser hat den Nachteil, daß durch Wärmeleitung über die Abstützscheiben und das Trägerrohr die Kühlung des Entladungsrohres nicht schnell und nicht effektiv bewirkt wird, so daß die Temperatur des Entladungsrohres noch recht hohe Werte erreicht.

Es ist die Aufgabe der vorliegenden Erfindung einen Gaslaser, insbesondere einen Ionenlaser zu schaffen, der sich durch eine hohe Lebensdauer und eine gute Reproduzierbarkeit der erzeugten Strahlung auszeichnet.

Diese Aufgabe wird, ausgehend von einem Gaslaser nach dem Oberbegriff des Anspruchs 1 erfindungsgemäß dadurch gelöst, daß der Außenraum in mehrere, in axialer Richtung verlaufende Sektoren geteilt ist, und daß die Abstützscheiben Kanäle zum Durchfluß des Kühlmittels enthalten, deren Einund Ausflußöffnungen jeweils in einen zugeordneten Sektor des Außenraumes münden.

Das in einem Sektor des Außenraumes zufließende Kühlmittel fließt bei dem Laser nach der Erfindung parallel durch alle Abstützscheiben, kühlt diese also direkt und fließt über einen anderen Sektor des Außenraumes wieder ab. Ein solcher, gleichzeitig und parallel durch alle über das gesamte Entladungsrohr verteilte Abstützscheiben bewirkter Kühlmittelfluß kühlt das Entladungsrohr durch Wärmetausch schnell und effektiv. Durch Wahl des Kühlmittels und der Geschwindigkeit des Kühlmittelflußes läßt sich die Kühlung so steuern, daß das Entladungsrohr bei einer bestimmten Leistung des Lasers eine vorgewählte Temperatur nicht überschreitet.

Ganz besonders vorteilhaft ist es wegen des geringen Strömungsquerschnitts an die entsprechenden Zu- und Abflußöffnungen des Laser-Außenraumes einen geschlossenen Kühlmittel-Kreislauf anzuschließen. Wird in diesen ein Thermostat eingeschaltet, so läßt sich die Temperatur des Kühlmittels und damit auch die bei einer vorbestimmten Laserleistung erreichte Temperatur des Entladungsrohres konstant halten.

Es ist ohne weiteres klar, daß bei dem Laser nach der Erfindung durch die effektive Kühlung des Entladungsrohres eine hohe Lebensdauer des Lasers erreicht wird. Durch entsprechende Wahl der Kühlmittel-Parameter läßt der Laser auch den Betrieb bei höheren Leistungen zu, und zwar ohne Verringerung seiner Lebensdauer im Vergleich zu Ionenlasern bekannter Bauart, die mit geringeren Leistungen betrieben werden. Schließlich kann bei dem Laser nach der Erfindung das Entladungsrohr mit höheren Strömen belastet werden, so daß sich im Vergleich mit herkömmlichen Gaslasern höhere Ausgangsleistungen bei gleichen Abmessungen des Lasers erreichen lassen.

Durch die effektive Kühlung des Entladungsrohres bleibt bei dem Laser nach der Erfindung dieses Rohr während des Betriebes in seiner Position und Länge konstant, d. h. das Laservolumen bleibt konstant. Damit wird eine verbesserte Stabilität in der Ausgangsleistung und in der spektralen Verteilung der erzeugten Laserstrahlung erreicht ; der Laser erzeugt Strahlung in einer stabilen Grundmode.

Vorteilhafte Ausgestaltungen der Abstützscheiben und der Kühlmittelkanäle ergeben sich aus den Unteransprüchen 2-4. Die Abstützscheiben sind aus einem Material mit hoher Wärmeleitfähigkeit, beispielsweise aus Kupfer gefertigt. Die Scheiben selbst sind zweckmäßig einstückig und die Kühlmittelkanäle sind durch Bohrungen gebildet. Es ist jedoch auch möglich jede Scheibe aus zwei Hälften zusammenzusetzen, wenn die Kühlmittelkanäle einen gebogenen Verlauf haben sollen.

Zweckmäßige Ausgestaltungen des Entladungs- und des Trägerrohres sind Gegenstand der Unteransprüche 5 bis 8.

Die Erfindung wird im folgenden anhand der Fig. 1-5 der beigefügten Zeichnungen näher erläutert. Im einzelnen zeigen :

Fig. 1 einen Längsschnitt durch ein Ausführungsbeispiel eines Lasers nach der Erfindung ;

Fig. 2 einen Längsschnitt durch einen Teil eines anderen Ausführungsbeispiels ;

Fig. 3 einen Schnitt entlang der Linie III-III der Fig. 2 ;

Fig. 4 einen der Fig. 3 entsprechenden Schnitt durch ein anderes Ausführungsbeispiel einer Abstützscheibe ;

Fig. 5 einen der Fig. 3 entsprechenden Schnitt durch ein weiteres Ausführungsbeispiel einer Abstützscheibe ;

Fig. 6 eine schematische Darstellung eines Lasers mit geschlossenem Kühlmitel-Kreislauf.

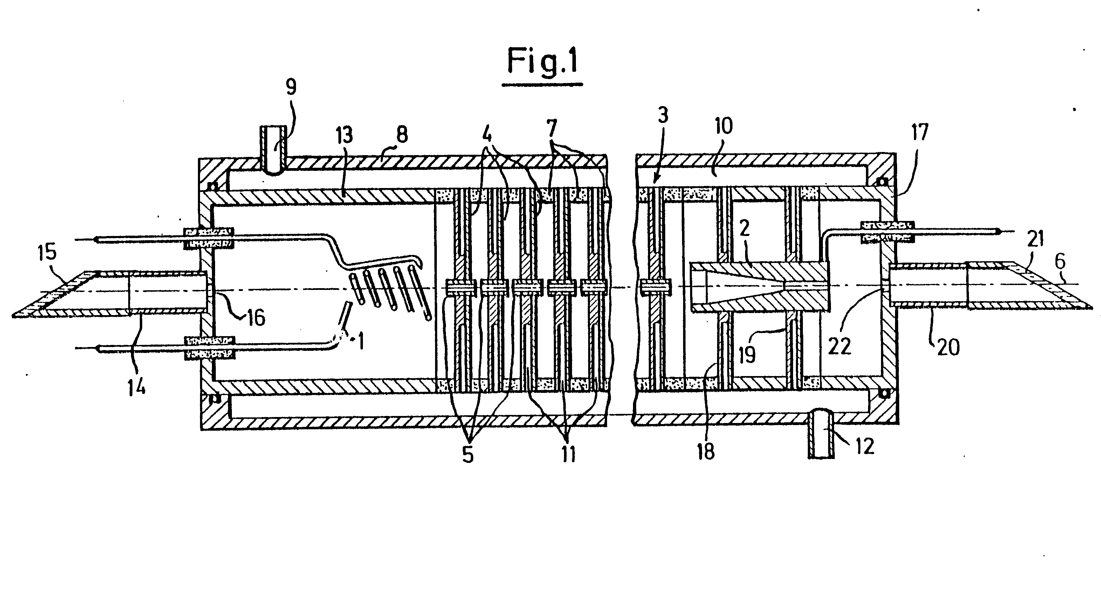

In Fig. 1 ist mit 1 eine Kathode und mit 2 die zugeordnete Anode des dargestellten Gaslasers bezeichnet. Kathode 1 und Anode 2 sind in einem Trägerrohr 3 angeordnet, daß aus mehreren Teilen besteht. Mehrere Abstützscheiben 4 aus Material guter Wärmeleitfähigkeit bilden im dargestellten Ausführungsbeispiel Teile des Trägerrohres 3. Jede der Abstützscheiben 4 weist eine Zentralbohrung auf, in welcher ein kurzes Rohrstück 5 gehalten ist. Alle diese Rohrstücke 5 sind so angeordnet, daß ihre Achsen mit der optischen Achse 6 des Lasers fluchten. Sie bilden zusammen das Entladungsrohr.

Das Trägerrohr 3 ist an seinen beiden Ende vakuumdicht abgeschlossen und mit einem aktiven Gas, beispielsweise Argon oder Krypton gefüllt. Während des Betriebes des Lasers brennt zwischen Kathode 1 und Anode 2 eine Plasmaentladung, welches sich entlang des Entladungsrohres 5 ersteckt. Durch diese Entladung wird das Gas im Entladungsrohr 5 angeregt. Es treten im Bereich des Entladungsrohres 5 hohe Ionenenergien auf. Aus diesem Grunde sind die Teile 5 des Entladungsrohres aus sputterresistentem Material gefertigt, d. h. aus Material das bei der auftretenden hohen Ionenenergie eine möglichst geringe Abtragerate aufweist. Als solches Material kann beispielsweise Wolfram oder auch Keramik wie Aluminiumoxid oder Aluminiumnitrid Verwendung finden.

Das Trägerrohr 3 besteht aus den Abstützscheiben 4 zwischen die jeweils ein Ring 7, beispielsweise aus Keramik gelegt ist. Die Scheiben 4 und die Ringe 7 sind beispielsweise durch Hartlöten miteinander verbunden um eine vakuumdichte Verbindung zu erzielen.

Das Trägerrohr 3 ist von einem Außenrohr 8 umgeben und in dem dadurch entstehenden Außenraum 10 fließt ein Kühlmittel von einer Zuflußöffnung zu einer Abflußöffnung. Als Kühlmittel kann z. B. Wasser, Öl oder eine der sonst üblichen Kühllösungen Verwendung finden. Das Kühlmittel umströmt nicht nur das Trägerrohr 3 sondern fließt auch durch Kanäle 11 in den Abstützscheiben 4, d.h. es findet über die gesamte Länge des Entladungsrohres 5 ein Wärmeaustausch mit dem Kühlmittel statt, das die erzeugte Wärme vom Entladungsrohr 5 abtransportiert.

Die Kathode 1 des Lasers ist in einem becherförmigen Teil 13 des Trägerrohres 3 angeordnet, in welches ein Rohrstück 14 eingesetzt ist das ein Brewster-Fenster 15 trägt. Das Rohrstück steht über eine Bohrung 16 mit dem Innenraum des Trägerrohres 3 in Verbindung.

Die Anode 2 ist in ein becherförmiges Teil 17 des Trägerrohres 3 eingebracht und dort mittels zweier Abstützscheiben 18, 19 gehalten, die ebenso wie die Abstützscheiben 4 mit Kanälen zum Durchfluß des Kühlmittels versehen sind. In das Teil 17 ist ein Rohrstück 20 eingesetzt, das ebenfalls ein Brewster-Fenster 21 trägt. Das Rohrstück 20 steht über eine Bohrung 22 mit dem Innenraum des Trägerrohres 3 in Verbindung.

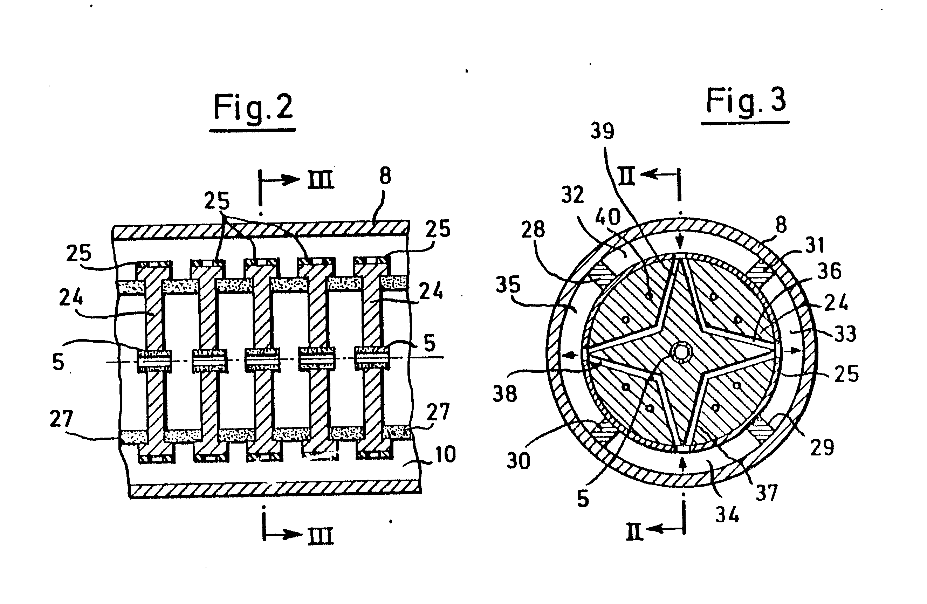

Im Ausführungsbeispiel der Fig. 2 sind Abstützscheiben 24 aus Kupfer vorgesehen, die in einer Zentralbohrung die Stücke 5 des Entladungsrohres tragen. Der äußere Umfang der Abstützscheiben 24 ist ringförmig verdickt und von einem Ring 25 aus einem Material geringer Wärmeausdehnung, beispielsweise aus rostfreiem Stahl umgeben. Zwischen die Abstützscheiben 24 sind ringförmige Keramikteile 27 eingefügt. Diese Keramikteile sind zumindest an den Rändern ihres Außenumfangs metallisiert und werden entlang ihrer horizontalen Berührungsfläche mit dem ringförmig verdickten Rand der Abstützscheiben 24 hartverlötet. Der Außenring 25 dient dazu während des Hartlötvorganges den Spalt zwischen dem Ring 27 und dem verdickten Teil der Scheibe 24 nicht zu groß werden zu lassen.

Wie Fig. 3 zeigt, ist der Außenraum 10 zwischen dem Außenrohr 8 und dem Trägerrohr 3 durch achsial verlaufende Teile 28, 29, 30, 31 in vier Sektoren 32, 33, 34, 35 geteilt. Jede Abstützscheibe 24 ist mit Bohrungen versehen, welche in Richtung auf das Entladungsrohr 5 verlaufen und die zusammen mehrere Kühlmittelkanäle 36, 37, 38, 39 bilden. Der Kühlmittelkanal 36 wird im dargestellten Beispiel aus der Kammer 32 mit Kühlmittel versorgt, welches in Richtung des Pfeiles in den Kühlkanal 36 eintritt und diesen im Sektor 33 wieder verläßt. Die Sektoren 32 und 34 sind jeweils mit einer Zuflußöffnung für das Kühlmittel versehen, während die Sektoren 33 und 35 mit jeweils einer Abflußöffnung versehen sind. Die Abstützscheiben 24 sind weiterhin mit Bohrungen 40 versehen, welche den Gasdurchfluß zwischen den einzelnen durch die Scheiben 24 voneinander getrennten Bereichen des Trägerrohres 3 ermöglichen.

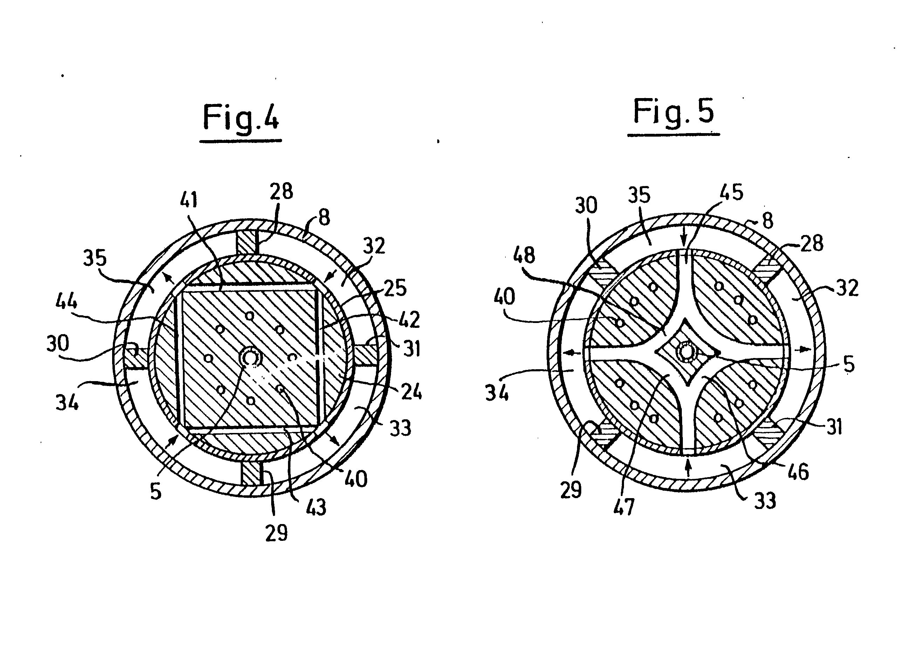

Bei dem in Fig. 4 dargestellten Ausführungsbeispiel sind die Kühlmittelkanäle durch geradeverlaufende Bohrungen 41, 42, 43, 44 gebildet. Diese Ausführungsform ist in der Fertigung einfacher herzustellen als die Form der Fig. 3, sie ist jedoch nicht so kühlwirksam wie diese.

Im Ausführungsbeispiel der Fig. 5 sind vier Kühlmittelkanäle 45, 46, 47, 48 vorgesehen, welche einen gebogenen Verlauf haben und deshalb sehr nahe an das Entladungsrohr 5 herangeführt sind. Solche Kühlkanäle lassen sich nicht mehr durch Bohren eines massiven Teiles erzeugen, so daß in diesem Beispiel jede Abstützscheibe 24 aus zwei Hälften zusammengesetzt wird.

Der in den Figuren dargestellte Gaslaser nach der Erfindung weist wegen der effektiven Kühlung durch die Abstützscheiben 4 im Vorratsbereich seitlich des Entladungsrohres 5 eine relativ hohe Gasdichte auf. Dadurch wird das sogenannte Gaspumpen vermindert und die dadurch entstehenden Verunreinigungen sind geringer. Wie aus den Figuren ersichtlich ist, haben die Gasdurchlaßbohrungen 40 in den Scheiben 4 bzw. 24 einen geringeren Durchmesser als die zur Aufnahme des Entladungsrohres 5 dienende Zentralbohrung.

In den dargestellten Ausführungsbeispielen ist das Entladungsrohr jeweils aus einzelnen Stücken 5 zusammengesetzt. Es ist jedoch auch möglich das Entladungsrohr aus einem einzigen Stück herzustellen, das in den Abstützscheiben 4 bzw. 24 gehalten ist. Ein solches einstückiges Gasrohr ist mit Gasdurchlaßbohrungen senkrecht zu seiner Achse zu versehen.

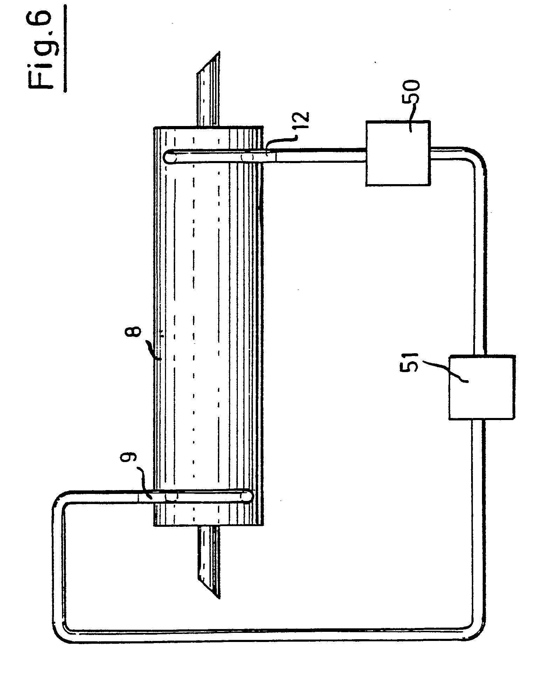

Üblicherweise findet bei dem Laser nach der Erfindung ein Kühlmittel Verwendung, das elektrisch nicht leitend ist und das entsprechend dem Ausführungsbeispiel der Fig. 6 in einem geschlossenen Kühlmittel-Kreislauf zirkuliert. In Fig. 6 ist dieser Kreislauf schematisch dargestellt, wobei mit 50 eine Umwälzpumpe und mit 51 ein Thermostat bezeichnet ist, welcher dazu dient das Kühlmittel auf einer vorbestimmten Temperatur zu halten.

Als Kühlmittel kann natürlich auch normales Wasser verwendet werden, wobei es dann notwendig ist die auf Spannung liegenden Teile mit einer Isolierschicht zu überziehen.

**Patentansprüche**

1. Gaslaser, insbesondere Ionenlaser mit einem zwischen einer Kathode (1) und einer Anode (2) angeordneten Entladungsrohr (5), das mit Hilfe mehrerer Scheiben (4) in einem gasgefüllten Trägerrohr (3) abgestützt ist, sowie einem vom Trägerrohr (3) und einem dieses umgebenden Außenrohr (8) gebildeten, von einem Kühlmittel durchströmten Außenraum (10), dadurch gekennzeichnet, daß der Außenraum (10) in mehrere, in axialer Richtung verlaufende Sektoren (32-35) geteilt ist, und daß die Abstützscheiben (4, 24) Kanäle (11, 36-39) zum Durchfluß des Kühlmittels enthalten, deren Ein- und Ausflußöffnungen jeweils in einen zugeordneten Sektor des Außenraums münden.

2. Gaslaser nach Anspruch 1, dadurch gekennzeichnet, daß die Abstützscheiben (4, 24) eine zur Halterung des Entladungsrohres (5) dienende Zentralbohrung aufweisen, und daß die Kühlmittelkanäle (11, 36-39) im wesentlichen in Richtung dieser Zentralbohrung verlaufen.

3. Gaslaser nach Anspruch 1 und 2, dadurch gekennzeichnet, daß in jeder Abstützscheibe (4, 24) mehrere, voneinander getrennte Kühlmittelkanäle (36-39) vorgesehen sind.

4. Gaslaser nach Anspruch 1 bis 3, dadurch gekennzeichnet, daß die Abstützscheiben (4, 24) zusätzliche, zum Gasdurchtritt dienende Bohrungen (40) aufweisen.

5. Gaslaser nach Anspruch 1 und 2, dadurch gekennzeichnet, daß das Entladungsrohr (5) einstückig ist und mehrere Radialbohrungen aufweist.

6. Gaslaser nach Anspruch 1 und 2, dadurch gekennzeichnet, daß das Enladungsrohr aus mehreren kurzen Rohrstücken (5) besteht, die jeweils in den Zentralbohrungen von den Abstützscheiben (4, 24) gehaltert sind.

7. Gaslaser nach Anspruch 1 und 2, dadurch gekennzeichnet, daß das Trägerrohr (3) aus Ringen (7, 27) aus einem Material hohen elektrischen Widerstandes besteht, wobei zwischen aufeinanderfolgenden Ringen (7, 27) jeweils eine Abstützscheibe (4, 24) angeordnet und vakuumdicht mit den Ringen verbunden ist.

8. Gaslaser nach Anspruch 7, dadurch gekennzeichnet, daß die Ringe (7, 27) aus Keramik bestehen.

9. Gaslaser nach Anspruch 1 und einem oder mehreren der folgenden, dadurch gekennzeichnet, daß jeder der im Außenraum (10) gebildeten Sektoren (32-35) mit einer Einlaß- bzw. einer Auslaßöffnung für das Kühlmittel versehen ist, und daß an diese Öffnungen ein geschlossener Kühlmittel-Kreislauf angeschlossen ist.

10. Gaslaser nach Anspruch 9, dadurch gekennzeichnet, daß der Kühlmittel-Kreislauf einen Thermostaten (51) zur gleichbleibenden Temperierung des Kühlmittels enthält.

**Claims**

1. A gas laser, in particular an ion laser, having a discharge tube (5) arranged between a cathode (1) and an anode (2), the discharge tube being supported with the aid of several disks (4) within a gas-filled support tube (3), and having an outer space (10) which is formed by the support tube (3) and an outer tube (8) surrounding same and is traversed by a coolant, characterized by the fact that the outer space (10) is divided into a plurality of axially extending sectors (32-35) and that the support disks (4, 24) contain channels (11, 36-39) for the passage of the coolant, the inlet and outlet openings of which channels discharging into a respective associated sector of the outer space.

2. A gas laser according to Claim 1, characterized by the fact that the support disks (4, 24) have a central borehole which serves for the mounting of the discharge tube (5) and that the coolant channels (11, 36-39) extend substantially in the direction of said central borehole.

3. A gas laser according to Claims 1 to 2, characterized by the fact that a plurality of coolant channels (36-39) which are separated from each other are provided in each support disk (4, 24).

4. A gas laser according to Claims 1 to 3, characterized by the fact that the support disks (4, 24) have additional boreholes (40) which serve for the passage of gas.

5. A gas laser according to Claims 1 and 2, characterized by the fact that the discharge tube (5) consists of a single piece and has a plurality of radial boreholes.

6. A gas laser according to Claims 1 and 2, characterized by the fact that the discharge tube consists of a plurality of short tube lengths (5) mounted in respective central boreholes of the support disks (4, 24).

7. A gas laser according to Claims 1 and 2, characterized by the fact that the support tube (3) consists of rings (7, 27) of a material of high electrical resistance, a support disk (4, 24) being arranged in each case between successive rings (7, 27), hermetically attached to the rings.

8. A gas laser according to Claim 7, characterized by the fact that the rings (7, 27) consist of ceramic.

9. A gas laser according to Claim 1 and one or more of the following claims, characterized by the fact that each of the sectors (32-35) formed in the outer space (10) is provided with an inlet and an outlet opening for the coolant and that a closed coolant circuit is connected to said openings.

10. A gas laser according to Claim 9, characterized by the fact that the coolant circuit comprises a thermostat (51) for maintaining the temperature of the coolant constant.

## Revendications

1. Laser à gaz, en particulier laser ionique, comprenant un tube à décharge (5) disposé entre une cathode (1) et une anode (2), qui est supporté à l'aide de plusieurs disques (4) dans un tube porteur (3) rempli de gaz, ainsi qu'un espace extérieur (10) parcouru d'un fluide de refroidissement et délimité par le tube porteur (3) et par un tube extérieur (8) qui l'entoure, caractérisé en ce que l'espace extérieur (10) est partagé en plusieurs secteurs (32-35) s'étendant en direction axiale et que les disques de support (4, 24) contiennent des canaux (11; 36-39) pour l'écoulement du fluide de refroidissement, dont les orifices d'entrée et de sortie du fluide débouchent chaque fois dans un secteur coordonné de l'espace extérieur.

2. Laser à gaz selon la revendication 1, caractérisé en ce que les disques de support (4, 24) présentent un perçage central servant au maintien du tube à décharge (5) et que les canaux (11, 36-39) pour le fluide de refroidissement s'étendent essentiellement en direction de ce perçage central.

3. Laser à gaz selon les revendications 1 et 2, caractérisé en ce que plusieurs canaux (36-39) séparés les uns des autres sont prévus pour le fluide de refroidissement dans chaque disque de support (4, 24).

4. Laser à gaz selon les revendications 1 à 3, caractérisé en ce que les disques de support (4, 24) présentent des perçages supplémentaires (40) pour le passage de gaz.

5. Laser à gaz selon les revendications 1 et 2, caractérisé en ce que le tube à décharge (5) est en une pièce et présente plusieurs orifices radiaux.

6. Laser à gaz selon les revendications 1 et 2, caractérisé en ce que le tube à décharge est composé de plusieurs courts tronçons tubulaires (5) qui sont maintenus chacun dans les perçages centraux des disques de support (4, 24).

7. Laser à gaz selon les figures 1 et 2, caractérisé en ce que le tube porteur (3) est constitué de bagues (7, 27) d'un matériau de haute résistivité électrique, un disque de support (4, 24) étant placé chaque fois entre des bagues (7, 27) qui se suivent et étant relié de façon étanche au vide aux bagues.

8. Laser à gaz selon la revendication 7, caractérisé en ce que les bagues (7, 27) sont en céramique.

9. Laser à gaz selon la revendication 1 et une ou plusieurs des revendications suivantes, caractérisé en ce que chacun des secteurs (32-35) formés dans l'espace extérieur (10), est pourvu d'un orifice d'admission et d'un orifice de sortie pour le fluide de refroidissement et qu'un circuit fermé pour le fluide de refroidissement est branché sur ces orifices.

10. Laser à gaz selon la revendication 9, caractérisé en ce que le circuit de fluide de refroidissement contient un thermostat (51) pour tempérer le fluide de refroidissement de façon constante.

## Fig.1

0 184 029

**Fig. 2**

**Fig. 3**

Fig.4

Fig.5

0 184 029

Fig.6